## Europäisches Patentamt

**European Patent Office**

**Office européen des brevets**

(19)

(11) Veröffentlichungsnummer: **0 035 258 B1**

## EUROPÄISCHE PATENTSCHRIFT

(12)

(45) Veröffentlichungstag der Patentschrift:
**06.11.85**

(51) Int. Cl.⁴: **H 02 P 8/00, H 04 L 17/24**

(21) Anmeldenummer: **81101448.9**

(22) Anmeldetag: **27.02.81**

(54) Anordnung zur Positionierung einer Schrittmotors in einer Fernschreibmaschine.

(30) Priorität: **04.03.80 DE 3008289**

(43) Veröffentlichungstag der Anmeldung:
**09.09.81 Patentblatt 81/36**

(45) Bekanntmachung des Hinweises auf die Patenterteilung:
**06.11.85 Patentblatt 85/45**

(84) Benannte Vertragsstaaten:
**CH FR GB IT LI NL SE**

(56) Entgegenhaltungen:
**DE - A - 2 328 501**
**DE - A - 2 629 096**
**DE - B - 2 156 093**
**DE - B - 2 414 602**
**DE - B - 2 442 688**

**MANFRED WECK "Werkzeugmaschinen,
Automatisierung und Steuerungstechnik", Band 3, 1.
Auflage, 1978 VDI-VERLAG GMBH, Düsseldorf (DE)
Seite 179, Zeile 1 - Seite 181, Zeile 22; Bilder 8-14.**

(73) Patentinhaber: **Siemens Aktiengesellschaft, Berlin und
München Wittelsbacherplatz 2, D-8000 München 2 (DE)**

(72) Erfinder: **Haunstetter, Franz, Dipl.-Ing.,
Birkenfeldstrasse 7 1/2, D-8900 Augsburg (DE)**
Erfinder: **Giebler, Fritz, Ing. grad.,
Sauerbruchstrasse 10/9, D-8000 München 70 (DE)**
Erfinder: **van der Woerd, Gerard, Dipl.-Ing.,
Lindenweg 15, D-8031 Gilching (DE)**

## Beschreibung

Die Erfindung betrifft eine Anordnung zum Betrieb eines Schrittmotores gemäss dem Oberbegriff des Patentanspruches 1.

Eine Anordnung der genannten Art ist aus der DE-OS 2 328 501 bekannt. In ihr wird eine Anordnung zum Betrieb eines Schrittmotores beschrieben unter Verwendung eines dem Rotor zugeordneten Positionsgebers und einer ein Drehfeld erzeugenden elektrischen Einrichtung, die einen digitalen Regelkreis aufweist, der derart ausgebildet ist, dass, abhängig vom Zielpunkt, der Schrittmotor rasch beschleunigt, bedarfsweise im Freilauf betrieben und in der Bremsphase durch eine in einem Speicher digital festgehaltenen Motor-Bremskennlinie bis zum Stillstand abgebremst wird.

Die Verwendung eines digitalen Regelkreises zur Ansteuerung eines Schrittmotors hat den Vorzug, dass die Ansteuerung besonders einfach erfolgen kann und dass ausserdem durch die Speicherung des optimalen Beschleunigungs- und Bremsverhaltens eine einfache Betriebsweise möglich ist. Wird eine Typenscheibe in einem Drucker über einen Schrittmotor angetrieben und dieser Schrittmotor entsprechend über einen digitalen Regelkreis angesteuert, so ist die damit erzielbare Genauigkeit zur Erzeugung eines sauberen Abdruckes nicht ausreichend, insbesondere die exakte und präzise Positionierung der Einzeltypen ist damit nicht möglich.

Es ist weiters aus der DE-OS 2 629 096 eine Anordnung zum Betrieb eines Schrittmotors bekannt, die zur Positionierung von Typenträgern in Druckeinrichtungen Verwendung findet und einen im Rotor zugeordneten Postionsgeber aufweist, wobei eine elektronische Einrichtung aus einer Mehrzahl von Wicklungen des Schrittmotors mit zugeordneten Schaltern vorgesehen ist. Die elektronische Einrichtung ist derart aufgebaut, dass sie im Betrieb des Schrittmotors ein in Abhängigkeit von Positionsgeber gesteuertes, gegenüber dem permanenten Rotorfeld des Schrittmotors verschobenes Statorfeld erzeugt.

Es ist weiters aus der US-PS 3 636 429 ein logischer Ansteuerschaltkreis für einen Schrittmotor bekannt, bei der die Ansteuerphase des Motors beim Bremsen invertiert wird.

Aufgabe der Erfindung ist es, für einen Schrittmotor, der insbesondere als Antriebsmotor für Typenträger in Druckeinrichtungen Verwendung findet, eine Anordnung bereitzustellen, die es ermöglicht, den Typenträger schnell und präzise einzustellen. Die Anordnung soll möglichst kurze Einstellzeiten ermöglichen.

Diese Aufgabe wird durch die im Anspruch 1 gekennzeichneten Merkmale gelöst.

Weitere vorteilhafte Ausführungsformen der Erfindung sind in den abhängigen Ansprüchen gekennzeichnet.

Durch die Anordnung ist es möglich, die Steuerung und die Positionierung der Typenscheibe zunächst digital vorzunehmen. Im Bereich der Abdruckposition wird dann durch einen analogen Regelvorgang die geforderte Präzision der Typeneinstellung über den Abdruck erreicht. Damit vereint die erfindungsgemässe Anordnung die Vorteile der digitalen Ansteuerung über den Schrittmotor mit den Vorteilen der präzisen Einstellmöglichkeit durch einen Servogleichstrommotor.

Ausführungsformen der Erfindung sind in den Zeichnungen dargestellt und werden im folgenden beispielsweise näher beschrieben. Es zeigen:

Fig. 1 ein Blockschaltbild der Anordnung zur Positionierung einer Typenscheibe in einer Fernschreibmaschine,

Fig. 2 eine schematische Darstellung der Ausgangssignale des Positionsgebers,

Fig. 3 eine schematische Darstellung der Ansteuerung des Drehfeldes als Funktion der Position des Rotors des Schrittmotores,

Fig. 4 eine schematische Darstellung eines Dreiphasen-Schrittmotores bei Betrieb mit offener Wicklung,

Fig. 5 eine schematische Darstellung eines Dreiphasen-Schrittmotores bei Betrieb mit kurzgeschlossener Wicklung,

Fig. 6 eine schematische Darstellung des Motordrehmomentes zur Kompensation der natürlichen Rast,

Fig. 7 ein Signal zur Darstellung der Umschaltfrequenz des Drehfeldes,

Fig. 8 ein Prinzipschaltbild der Anordnung zur Positionierung einer Typenscheibe in einer Fernschreibmaschine,

Fig. 9 eine schematische Darstellung des eigentlichen Positioniervorganges,

Fig. 10 eine schematische Darstellung der Ausgangssignale des Positioniergebers beim Positioniervorgang,

Fig. 11 eine schematische Darstellung des Analogregelkreises,

Fig. 12 ein Blockschaltbild des Betragsbildners und

Fig. 13 ein Blockschaltbild des verwendeten Zweipunkt-Stromreglers.

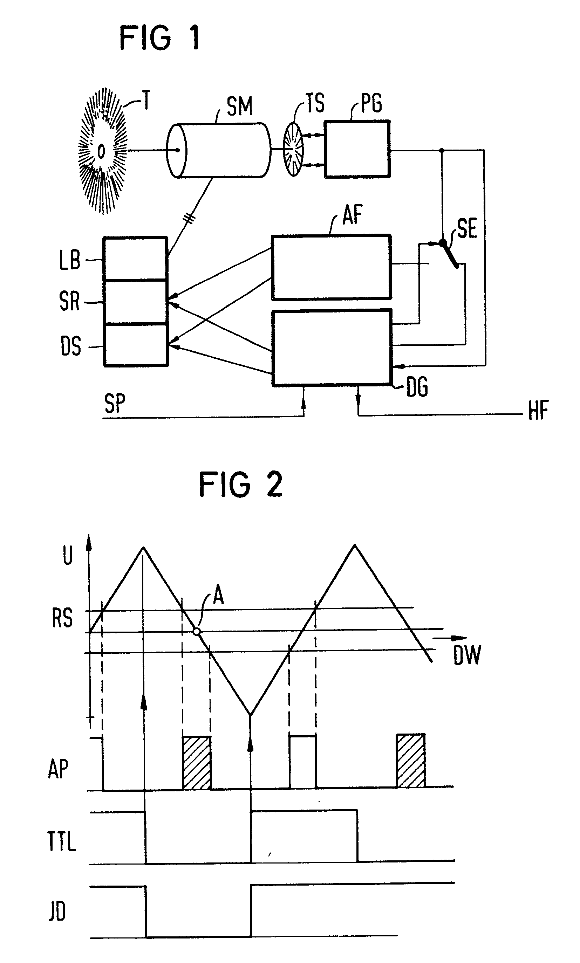

Die in der Fig. 1 dargestellte Anordnung zur Positionierung einer Typenscheibe in einer Fernschreibmaschine besteht aus einem Dreiphasen-Schrittmotor SM, dessen Läufer fest mit einer Typenscheibe T und einem inkrementalen optischen Positionsgeber PG gekoppelt ist. Dieser inkremantale optische Positionsgeber PG enthält eine Taktscheibe TS, die entsprechend der Anzahl der verwendeten Speichen an der Typenscheibe T Fenster aufweist, die über eine hier nicht dargestellte optische Anordnung abgetastet werden.

Die Positionieranordnung bildet zusammen mit dem Schrittmotor einen geschlossenen Regelkreis, wobei zur exakten Positionierung ein bedarfsweise über eine Schalteinrichtung SE zuschaltbarer digitaler Grobregelkreis DG und zur Feinregelung in die Sollposition ein analoger Feinregelkreis AF vorgesehen ist. Die Regelkreise AF, DG stehen jeweils mit einem dem Schrittmotor ansteuernden Drehfeldschalter DS, einem Zweipunkt-Stromregler, SR und einer dreiphasigen Leistungsbrücke LB in Verbindung. Über eine hier nicht dargestellte bekannte Eingabevorrichtung wird dem Regelkreis das Signal für die Sollposition SP der Typenscheibe T zugeführt. Nach erfolgter Einstellung der Typenscheibe T erfolgt über ein Druckhammerfreigabesignal HF die Freigabe und Auslösung des den Abdruck hervorrufenden Druckhammers.

Entsprechend der Darstellung der Fig. 2 liefert der Positionsgeber PG ein dreieckförmiges Regelsignal RS, das in der Fig. 2 in Abhängigkeit von dem Drehwinkel DW des Schrittmotores dargestellt ist. Neben diesem Regelsignal RS wird ausserdem noch zur Synchronisation des Positioniersystems ein rechteckförmiges Indexsignal ID und ein gegenüber dem Regelsignal RS um 90° versetztes TTL-Signal, aus dem die Bewegungsrichtung der Typenscheibe abgeleitet wird, abgegeben.

Das dreieckförmige Regelsignal S wird für den Analogregelvorgang der exakten Positionierung benötigt. Diejenige Flanke des Regelsignals RS, bei der das Potential des TTL-Signales auf Null liegt, ist der abdruckbaren Position zugeordnet. Dieser Bereich entspricht dem Feinregelungsbereich. Die Abweichung vom Potential Null des Regelsignals RS in der Umgebung der Abdruckstelle A wird im Feinregelbereich in einen proportionalen Motorstrom zur Ansteuerung des Schrittmotores SM umgesetzt. Im Nulldurchgang A wird abhängig vom Vorzeichen über den Drehfeldschalter DS das Drehmoment invertiert, wodurch die Position der Typenscheibe festgehalten wird. Die unterhalb der Kurve für das Regelsignal RS dargestellten schraffierten Bereiche AP definieren den Freigabebereich in der Umgebung der Abdruckposition A, bei der der Druckhammer betätigt wird.

Als Antrieb für die Typenscheibe dient ein kollektorloser vierpoliger Dreiphasen-Schrittmotor SM. Dieser Schrittmotor hat gegenüber einem kommutatorgesteuerten Gleichstrommotor den Vorteil, dass er verschleissfreier arbeitet und ausserdem geringere Aussenmasse aufweist. Für den Antrieb ist es jedoch erforderlich, entsprechend der Erfindung ein elektronisches Drehfeld zu erzeugen und dieses entsprechend anzusteuern.

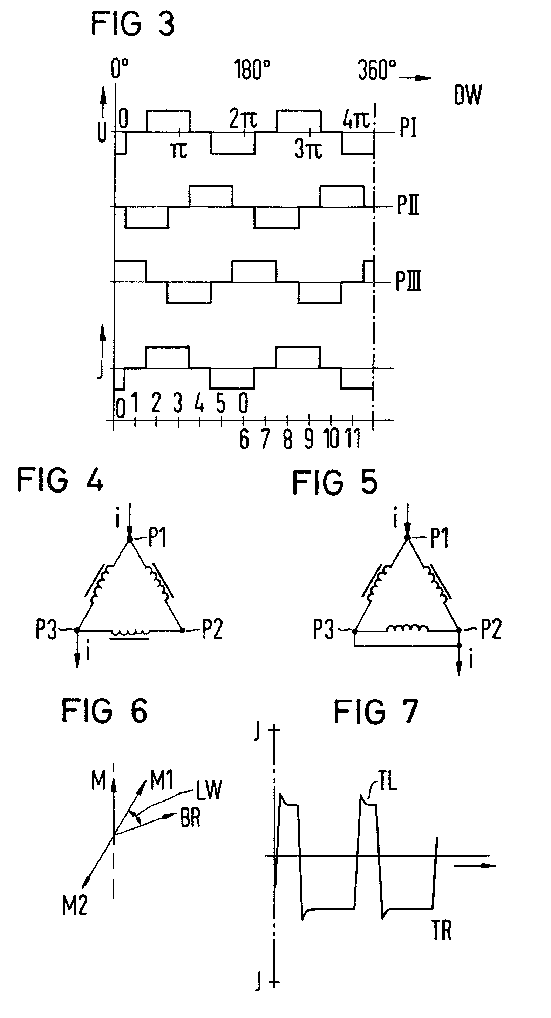

Bei einer Umdrehung des Rotors des Schrittmotors SM werden die einzelnen Phasen P1, P2 und P3 entsprechend der Darstellung der Fig. 3 und 4 über eine Leistungsbrücke LB wechselseitig an einen Stromgenerator geschaltet. Damit ergibt sich der in der Fig. 3 dargestellte Spannungsverlauf U an den Motorphasen P1, P2 und P3. Der Stromverlauf I in einer Motorphase P1 ist ebenfalls in der Fig. 3 dargestellt. Die Abszisse des Signaldiagramms der Fig. 3 bildet ausgehend von der Synchronisationsstellung der Drehwinkel DW mit seinen einzelnen bei Schrittmotorbetrieb mit einer kurzgeschlossenen Wicklung auftretenden Rastpositionen 0–11.

Damit ein Drehmoment an der Motorwelle abgegeben werden kann, muss das Statorfeld des Schrittmotores SM zu dem permanenten Rotorfeld um einen vorgegebenen Phasendifferenzwinkel PD phasenverschoben sein. Damit ist das Drehmoment theoretisch proportional dem Betrag von Sinus PD und dem Motorstrom, der das Statorfeld aufbaut. Bei homgogenem Feldverlauf ist das Maximum bei einem Phasendifferenzwinkel PD von 90° (Mitte zwischen Stator und Rotorfeld) erreicht. Der Schrittmotor SM wird dabei entsprechend der Darstellung der Fig. 4 so angesteuert, dass von den drei Anschlüssen jeweils nur zwei bestromt werden, wobei in den Darstellungen der Fig. 4 und 5, i den Stromvektor und P1, P2, P3 die Phasen bezeichnet. Die Feldumschaltung des Drehfeldes erfolgt im Bereich von +/–30°. Damit ergeben sich zwölf in der Fig. 3 dargestellte Umschaltpunkte. Bei einer Typenscheibe mit 108 belegbaren Positionen wird über die Ansteueranordnung nach jeweils 9 überlaufenden Zeichenteilungen des Positionsgebers PG das Statorfeld weitergeschaltet.

Für die einwandfreie Funktion des Motors SM ist es erforderlich, den Stand des Statorfeldes ebenso wie den der Typenscheibe auf die Synchronisationsstellung zu beziehen. Bei statischer Bestromung wird die Ausgangsstellung des Statorfeldes ermittelt und daraufhin die Abtastscheibe TS des Positionsgebers PG ausgerichtet. Die erforderliche Phasendifferenz von 90° erzeugt die Ansteueranordnung, wobei durch diesen erzeugten elektronischen Kommutator sich der Schrittmotor wie ein kommutatorgesteuerter Gleichstrommotor mit zwölf Kollektorlamellen verhält.

Ein für Schrittmotoren typischer Betrieb mit einer 30°-Steuerung (Fig. 4, Fig. 5), bei der wechselweise ein Wicklungsanschluss freibleibt bzw. zwei Wicklungen parallel betrieben werden, hat bei der vorliegenden Anordnung Nachteile. Durch den vollständigen Stromabbau in der jeweils kurzgeschlossenen Wicklung treten verstärkt Wirbelstromverluste auf. Die unterschiedliche Leistungsaufnahme beim Umschalten von der Betriebsweise nach Fig. 4 auf eine Betriebsweise nach Fig. 5 bedingt Drehmomentschwankungen.

Um den Schrittmotor in Abdruckposition A festzuhalten, wird über die Ansteueranordnung entsprechend der Darstellung der Fig. 6 das angebotene Drehfeld über den Drehfeldschalter DS invertiert, was einer Phasendrehung von 180° entspricht.

In der Fig. 6 bezeichnet der Vektor BR das Rotorfeld, M1 das Statorfeld mit zugehörigem inversen Statorfeld M2, M das resultierende Drehmoment und LW den Lastwinkel des Schrittmotores SM. Die Umschaltung des Drehfeldes erfolgt mit einer Frequenz von ca. 5 kHz, wobei das Steuersignal für diesen Vorgang der Positionsgeber PG über das Vorzeichen des analogen Regelsignales RS liefert. Die Fig. 7 zeigt dabei eine schematische Darstellung des Stromverlaufes im Schrittmotor I in Abhängigkeit von der Zeit. Dabei entspricht TL und TR der Einschaltdauer für den Links- bzw. Rechtslauf des Rotors.

Als resultierendes Moment M (Fig. 6) in Abdruckposition A ergibt sich damit M = M1·TL·sinus LW-M2·TR·sinus LW.

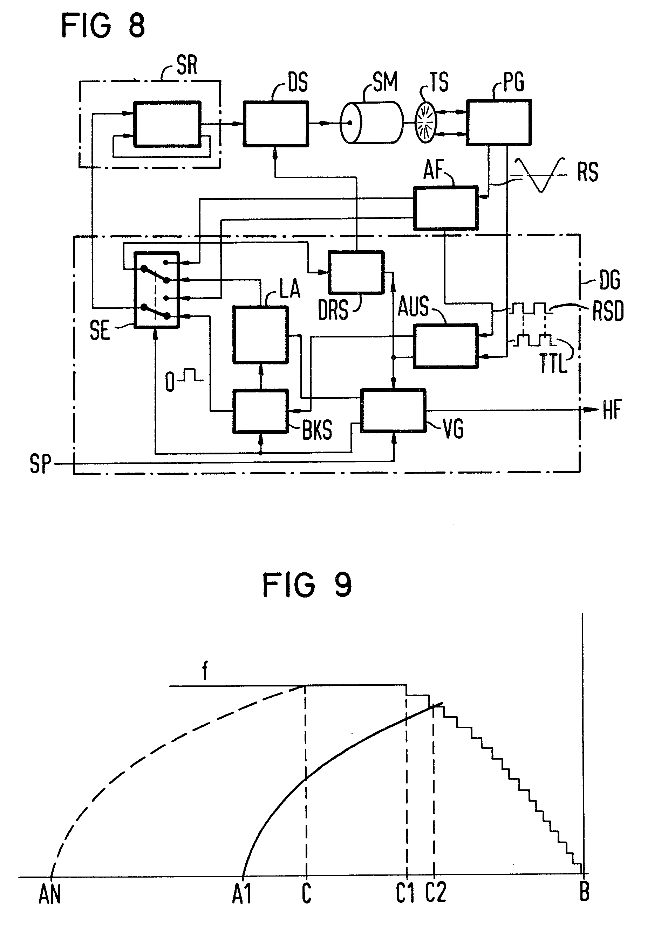

Die Fig. 8 zeigt ein gegenüber der Darstellung der Fig. 1 erweitertes Blockschaltbild der erfindungsgemässen Ansteueranordnung. Der digitale Grobregelkreis ist dabei strichpunktiert umrahmt. Er funktioniert in folgender Weise: Der digitale Grobregelkreis DG erhält seine Signale zur Bestimmung der Position RS (digitalisiert: RSD) und Drehrichtung TTL über den Positionsgeber PG. Ausgehend von der Synchronstellung wird die Positioniersadresse SP über eine Vergleichseinrichtung VG mit der jeweiligen Istposition, die über eine Auswerteschaltung AUS ermittelt wird, verglichen. Damit wählt der digitale Regelkreis über eine logische Anordnung LA die Drehrichtung, welche die kürzeste Verbindung zur neuen Position liefert, und steuert diese mit maximalem Moment (Konstantstrom) an. Der Digitalregelkreis DG vergleicht dabei die jeweilige Geschwindigkeit anhand der Zeit zwischen den Nulldurchgängen des Ausgangssignales RS des Positionsgebers mit dem Sollwert und entscheidet, ob beschleunigt, gebremst oder auf Freilauf umgeschaltet wird. Die Vollbremsung geschieht dabei durch Stromumkehr und findet daher mit maximalem Moment (Konstantstrom) statt.

Ist die Sollposition erreicht und die abzudrukkende Type im Umgebungsbereich der Abdruckstelle A (Fig. 2), so wird auf den analogen Feinregelkreis AF umgeschaltet, der die Feinregelung auf die Abdruckposition übernimmt. Erst mit einer neuen Adresse oder durch mechanisches Herausdrehen der Typenscheibe wird der digitale Regelkreis DG wieder aktiv.

Die Positionierung zur nächsten Position der Typenscheibe erfolgt über die kürzeste Entfernung anhand einer in der Fig. 9 dargestellten Geschwindigkeitskurve. Das Drehfeld ist dabei so ausgelegt, dass der Motor seine maximale Drehgeschwindigkeit von ca. 1400 Umdrehungen je Minute schon nach ca. 20 überlaufenden Zeichenteilungen (70°-DREHUNG) erreicht.

Entsprechend der Darstellung der Fig. 9, bei der die Umdrehungsgeschwindigkeit des Motors des Schrittmotores SM (Ordinate) in Abhängigkeit von der Entfernung (Abszisse) zwischen zwei Positionierpunkten A und B dargestellt ist, erfolgt die Positionierung von der Anfangsposition AN bis zur Endposition B wie folgt:

Der Motor SM wird bis zur Position C zunächst voll beschleunigt. Der Punkt C ist die Position, wo die von der Bremskurve vorgegebene Geschwindigkeit erreicht wird. Dieser Beschleunigungsphase schliesst sich eine Phase konstanter Geschwindigkeit (Freilauf) vom Punkt C zum Punkt C1 an. Ab dem Punkt C1 bis zum Sollpunkt B wird der Motor entsprechend der dargestellten Bremskurve, die in ihrem Verlauf in den Bremskurvenspeicher BKS gespeichert ist, abgebremst. Die Bremskurve enthält die Beziehung zwischen der Geschwindigkeit und der Entfernung bis zur Sollposition B für einen optimalen Bremsvorgang. Sie ist so ausgelegt, dass der von den magnetischen Toleranzen des Motores her gesehen ungünstigste Fall berücksichtigt wird, so dass der Motor in der Sollposition B ohne wesentliches Überschwingen zum Stehen kommt. Stärkere Motoren haben auch ein entsprechend besseres Bremsverhalten. Dies wird durch laufendes Umschalten zwischen Bremsung und Freilauf entsprechend der dargestellten treppenförmigen Bremskurve ausgeglichen. Jedem Motor kann dabei eine spezielle Bremskurve zugeordnet sein.

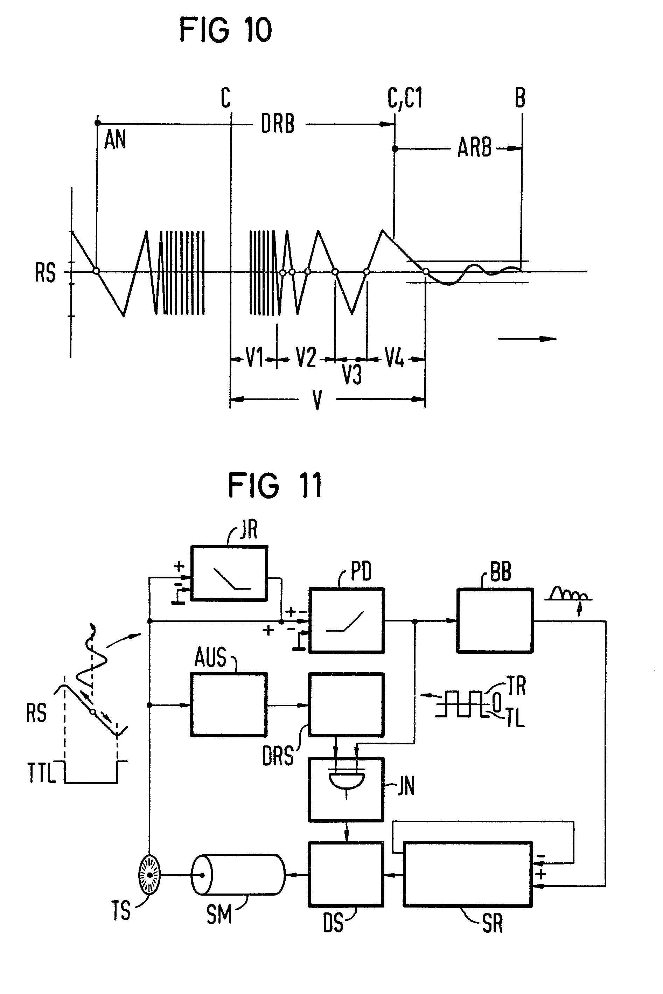

Über die in Form von Zwischenzeiten gespeicherte Bremskurve wird die Winkelgeschwindigkeit des Schrittmotores SM soweit vermindert, dass die vollständige Abbremsung in der Umgebung der Sollposition B von dem Analog-Feinregelkreis AF durchgeführt werden kann. Die eigentliche Abbremsung erfolgt dadurch, dass zu Beginn jeder Periode des empfangenen Positionsgebersignals RS die gemessene Istgeschwindigkeit mit dem vorgegebenen Wert verglichen wird. Abhängig davon wird während dieser Signalperiode auf Bremsen oder Freilauf geschaltet. Wenn die Entfernung zur Sollposition kleiner als fünf Zeichenteilungen ist, wird dieser Vergleich in jeder halben Zeichenteilung durchgeführt. In der vorletzten halben Zeichenteilung vor der Sollposition wird abhängig von der gemessenen Geschwindigkeit gewählt zwischen Freilauf, einem kurzen oder einem langen Bremsimpuls. In der letzten halben Zeichenteilung vor der Sollposition wird der Motor mit einem von der gemessenen Geschwindigkeit in seiner Dauer abhängiger Bremsimpuls beaufschlagt. Damit wird erreicht, dass der Motor mit angepasster Geschwindigkeit in die Sollposition einläuft. Im Bereich der Sollposition B wird die Positionierung von dem analogen Regelkreis AF übernommen, der den Motor in die exakte Position bringt. Selbstverständlich ist es auch möglich, dass die Ausgangspunkte AP und die Zielpunkte B dichter beieinander liegen, so dass dazwischen keine Freilaufperiode notwendig ist. Ein derartiger Beschleunigungs- und Bremskurvenverlauf ist in der Fig. 9 zwischen den Punkten A1, den Punkten C2 und dem Punkt B dargestellt. Eine genaue Darstellung des Positioniervorganges vom Punkt AN bis Punkt B ergibt sich aus der Fig. 10, in der das Regelsignal RS in Abhängigkeit von der Zeit (Abszisse) dargestellt ist. Auch hier erkennt man den Beschleunigungsbereich vom Punkt AN bis zum Punkt C. An diesen Beschleunigungsbereich schliesst sich ein Bereich konstanter Drehzahl an, der hier nicht dargestellt ist, und im Bereich zwischen den Punkten C1 und dem Sollpunkt B folgt die eigentliche Abbremsung. Innerhalb des Verzögerungsbereiches V unterscheidet man den Bereich V1, bei dem der Vergleich zwischen Ist- und Sollwert zu Beginn jeder Periode des Regelsignales RS stattfindet, wobei die Dauer einer Periode des Regelsignales RS einer Zeichenteilung entspricht.

Im Abstand von fünf Zeichenteilungen von der Sollposition B erfolgt der Vergleich zwischen Soll- und Istwert der Geschwindigkeit in jeder halben Periode des Signales RS, womit sich die Bereiche V2, V3 und V4 ergeben. In der letzten halben Zeichenteilung V4 vor dem Erreichen der Sollposition B wird die Geschwindigkeit des Schrittmotores auf eine konstante Zieleinlaufgeschwindigkeit abgestimmt. Die weitere Positionierung wird dann von dem analogen Feinregelkreis AF übernommen. Man unterscheidet also bei der Positionierung zwischen dem digitalen Regelbereich DRB und dem analogen Regelbereich ARB.

Zur Feinregelung der Typenscheibe in die Abdruckposition ist der in der Fig. 11 dargestellte analoge Regelkreis vorgesehen.

Während der analogen Regelphase ARB wird ausgehend von einer Auswerteschaltung AUS über die Steuerung DRS einem Inverter IN ein richtungskonstantes Drehfeld angeboten, wobei der Inverter IN die Aufgabe hat, nach Erreichen der Abdruckposition das Drehfeld über den Drehfeldschalter DS zu invertieren, um damit den Motor in Abrufposition festzuhalten.

Der analoge Feinregelkreis verwendet als Stellgrösse die Amplitude des analogen Gebersignals RS des Positionsgebers PG, wobei das Motormoment in Abhängigkeit von dieser Grösse in Betrag und Amplitude so geregelt wird, dass der Motor mit einer gedämpften Bewegung im Nulldurchgang der Regelflanke zur Ruhe kommt. Zur Überwachung ist ein hier nicht dargestellter zusätzlicher Verstärker angeordnet, dem dieses Gebersignal RS zugeführt wird und dessen Ausgangssignal anzeigt, ob die Typenscheibe genügend genau in der Abdruckposition steht. Ist die Abdruckposition erreicht, wird über die Auswerteschaltungsanordnung AUS nach einer vorbestimmten Zeit von ca. 2 ms, während der sich die Position nicht mehr ändern darf, der Abdruck freigegeben.

Nach dem Abdruck wird die Verstärkung des analogen Feinregelkreises soweit abgesenkt, dass der Motor noch sicher auf der Regelflanke steht, ein Störgeräusch durch die ständige Drehfeldinvertierung über den Inverter IN jedoch nur schwach hörbar ist.

Der analoge Feinregelkreis AF enthält einen Proportional-Differentialregler PD, dem ein Integralregler IR überlagert ist. Dem PD-Regler nachgeschaltet ist ein Betragsbildner BB, der über einen Zweipunkt-Stromregler SR mit dem Drehfeldschalter DS in Verbindung steht.

Der Integralregler IR hat dabei die Aufgabe, die Verstärkung für annähernd statische Signale bei geringer Winkelgeschwindigkeit oder Stillstand stark anzuheben, wodurch der Einfluss des permanenten Motorrastmomentes unterdrückt und eine bessere Positioniergenauigkeit erreicht wird. Für schnelle Bewegungen ist dieser Integralregler IR praktisch ohne Wirkung.

Der Proportional-Differentialregler PD hat die Aufgabe, die nacheilende mechanische und elektrische Phasenverschiebung des Motors zu kompensieren. Der Verstärkungsverlauf ist dabei der Motorbewegung so angepasst, dass die Dämpfung der Drehbewegung im Nulldurchgang des Ausgangssignales des Positionsgebers RS erfolgt. Damit wird die Schwingneigung des gesamten Regelkreises stark gedämpft.

Das Ausgangssignal des Proportional-Differentialreglers PD wird einerseits dem Inverter IN zugeführt, andererseits einem Betragsbildner BB, der die Abweichung vom Nullpunkt in eine proportionale Gleichspannung umsetzt. Diese Gleichspannung wird im Zweipunkt-Stromregler SR in einen proportionalen Strom und damit in ein proportionales Motormoment umgesetzt.

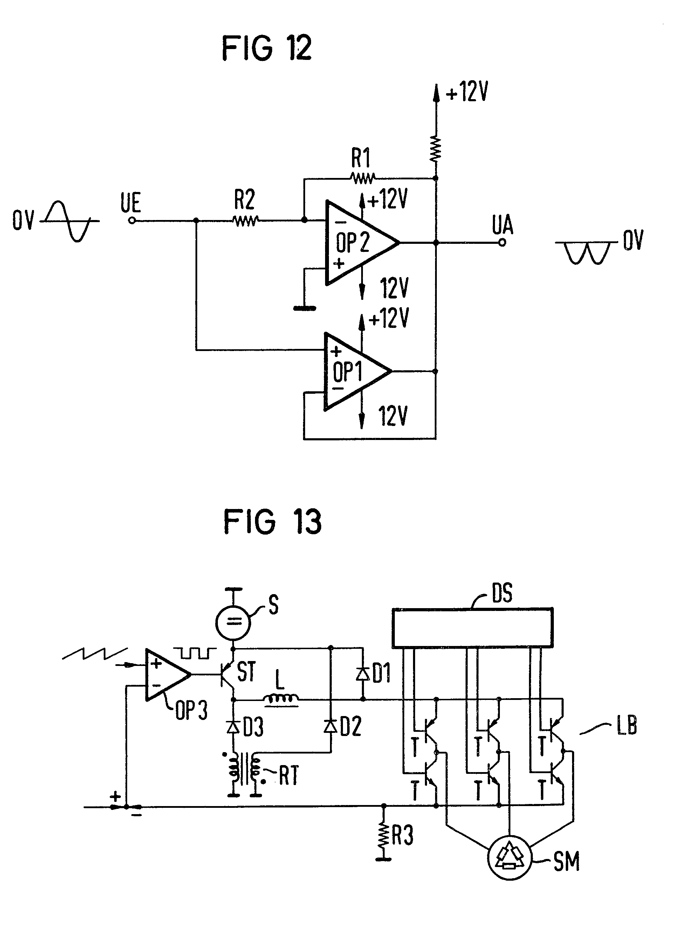

Der in der Fig. 12 dargestellte Betragsbildner ist ein Präzisionsgleichrichter mit geringem Nullpunktfehler. Er besteht aus zwei Operationsverstärkern OP1 und OP2, die einen gemeinsamen Ausgang haben und die so geschaltet sind, dass ein Verstärker den Verstärkungsfaktor +1 und der andere den Verstärkungsfaktor −1 aufweist. Zu diesem Zwecke ist der erste Operationsverstärker OP1 mit seinem inversen Eingang direkt und der zweite Operationsverstärker OP2 mit seinem inversen Eingang über einen Widerstand R1 von 10 kOhm auf den gemeinsamen Ausgang UA gekoppelt. Das Eingangssignal wird dem invertierenden Eingang des Operationsverstärkers OP2 über einen Widerstand R2 (10 kOhm) und dem nichtinvertierenden Eingang des Operationsverstärkers OP1 direkt zugeführt. Die Spannung am gemeinsamen Ausgang UA des Operationsverstärkers OP1 und OP2 entspricht damit dem negativen Betrag der Eingangsspannung UE.

Wie vorhergehend beschrieben, wird der Schrittmotor mit eingeprägtem Strom betrieben, der in der Zielposition (Abdruckstelle) auf Null geregelt werden kann. Dies geschieht entsprechend der Darstellung der Fig. 13 über den Drehfeldschalter DS, der über eine Leistungsbrücke LB mit Darlington-Transistoren T den Schrittmotor SM mit entsprechendem Strom beaufschlagt.

Für die Freilaufphase wird die Drehstrom-Leistungsbrücke LB gesperrt und der Motor damit stromlos geschaltet. Der Zweipunktregler selbst arbeitet mit einer festen Frequenz von ca. 40 kHz, die einem Operationsverstärker OP3 zugeführt wird. In diesem Operationsverstärker wird das über einen Widerstand R3 gemessene vorverstärkte Stromsignal im analogen Regelkreis AF dem Ausgangssignal des Betragsbildners BB oder im digitalen Grobregelkreis DG einer konstanten Spannung verglichen und damit ein Schalttransistor ST angesteuert. Entsprechend dem Ansteuersignal an seiner Basis beaufschlagt der Schalttransistor ST über eine Speicherdrossel L den Schrittmotor SM mit Betriebsspannung von ca. 40 V. Beim Ausschalten des Schalttransistors ST ist es zur Vermeidung von Steuerungenauigkeiten am Motor notwendig, die in der gesamten Schaltungsanordnung gespeicherte Energie schnell abzubauen. Dies geschieht mit Hilfe eines Rückspeisetransformators RT, dessen Primärwicklung über eine Freilaufdiode D3 mit dem Ausgang des Schalttransistors ST und dessen Sekundärwicklung über eine Rückspeisediode D2 mit der Gleichspannung S in Verbindung steht. Die Wicklungen des Rückspeisetransformators RT sind elektrisch gegenläufig angeschlossen, wobei das Übersetzungsverhältnis 1:2 beträgt. Der Rückspeisetransformator RT baut die im ausgeschalteten Zustand des Schalttransistors ST im Schaltkreis gespeicherte Energie dadurch ab, dass er sie in die Spannungsversorgung S zurückspeist.

Im abgeschalteten Zustand des Schalttransistors ST liegt der Ausgang des Schalters ST infolge der Speicherdrossel L auf einem Potential von –20 V. Diese Spannung führt am Rückspeisetransformator RT sekundärseitig zu einer Spannung von 40 V, womit über die Rückspeisediode D2 eine Rückspeisung der gespeicherten Energie in die Gleichspannungsquelle S erfolgt. Zusätzlich zu den Dioden D2 und D3 ist eine weitere Freilaufdiode D1 zwischen dem Ausgang der Speicherdrossel L und der Spannungsquelle S angeordnet. Die dem eigentlichen Schrittmotor zugeordnete Freilaufdiode D1 hat die Aufgabe, beim Blockieren der Transistoren T über die Drehfeldsteuerung DS die in der Speicherdrossel L gespeicherte Energie in die Gleichspannungsversorgung S zurückzuführen.

Bezugszeichenliste

| | |
|---|---|
| SM | Dreiphasenschrittmotor |
| T | Typenscheibe |
| PG | Positionsgeber |
| TS | Taktscheibe |
| SE | Schalteinrichtung |
| DG | digitaler Grobregelkreis |
| AF | analoger Feinregelkreis |
| DS | Drehfeldschalter |
| SR | Stromregler |
| LB | Leistungsbrücke |
| SP | Sollposition |
| HF | Druckhammer-Freigabesignal |
| RS | Regelsignal des Positionsgebers |
| RSD | digitalisiertes Regelsignal des Positionsgebers |
| DW | Drehwinkel |
| ID | Indexsignal (Synchronisation) |
| TTL | Drehrichtungssignal |
| A | Abdruckposition |
| AP | Freigabebereich |
| P1, | P2, P3 Phasen |
| U | Spannungsverlauf an den Motorphasen |
| PD | Phasendifferenzwinkel |
| 0, 1, 2 .. 11 | Indexpunkte |
| I | Strom in den Phasen |
| BR | Rotorfeld |
| M1 | Statorfeld |
| M2 | inverses Statorfeld |
| LW | Lastwinkel |
| TL, | TR Links- bzw. Rechtslauf |
| LA | logische Anordnung |
| AUS | Auswerteschaltungsanordnung |
| BKS | Bremskurvenspeicher |
| VG | Vergleicher |
| AN | Anfangsposition |
| B | Endposition |
| C, C2 | Beschleunigungsendpunkte |
| C1 | Ende der Freilaufphase |
| V1 bis V4 | Verzögerungsbereiche |
| DRB | Digitalregelbereich |
| ARB | analoger Regelbereich |
| IR | Integralregler |
| PD | Proportional-Differentialregler |
| IN | Inverter |
| BB | Betragsbildner |
| OP1, OP2, OP3 | Operationsverstärker |
| UA | Ausgang |
| UE | Eingang |
| R1 | bis R3 Widerstände |
| T | Transistoren |
| ST | Schalttransistor |
| L | Speicherdrossel |
| RT | Rückspeisetransformator |
| D3 | Freilaufdiode |
| D2 | Rückspeisediode |
| D1 | Freilaufdiode |

**Patentansprüche**

1. Anordnung zum Betrieb eines Schrittmotores (SM) insbesondere zur Positionierung von Typenträgern (T) für Druckeinrichtungen o.dgl. unter Verwendung eines dem Rotor zugeordneten Positionsgebers (PG) und einer ein Drehfeld erzeugenden elektrischen Einrichtung, die einen digitalen Regelkreis (DG) aufweist, der derart ausgebildet ist, dass, abhängig vom Zielpunkt, der Schrittmotor (SM) rasch beschleunigt, dann bedarfsweise im Freilauf betrieben und in der Bremsphase durch eine in einem Speicher (BKS) digital festgehaltene Motor-Bremskennlinie abgebremst wird, dadurch gekennzeichnet, dass ein zusätzlicher analoger Servoregelkreis (AF) vorgesehen ist, der in Abhängigkeit vom augenblicklichen Signalwert des dreieckförmigen Positionsgebersignals (PG) die analoge Feinregelung bis zum Zielpunkt als Nulldurchgang des dreieckförmigen Positionsgebersignals (PG) nach der Art eines kommutatorgesteuerten Gleichstrommotors vornimmt.

2. Anordnung nach Anspruch 1, dadurch gekennzeichnet, dass die Ausgangssignale des Positionsgebers (PG) aus einem ersten dreieckförmigen, flankenweise den abdruckbaren Zielpunkten zugeordneten Signal (RS) und einem zweiten gegenüber dem ersten Signal um einen Phasenwinkel verschobenen Rechtecksignal (TTL) zur Ableitung der Bewegungsrichtung und einem weiteren dritten Signal (ID) zur Synchronisation bestehen.

3. Anordnung nach Anspruch 1, dadurch gekennzeichnet, dass der Schrittmotor (SM) in einer Halteposition dadurch festgehalten wird, dass über eine logische Schaltungsanordnung (IN) das Statorfeld in Abhängigkeit vom analogen Regelsignal (RS) des Positionsgebers (PG) invertiert wird.

4. Anordnung nach einem der Ansprüche 1 oder 2, dadurch gekennzeichnet, dass der analoge Servoregelkreis (AF) einem dem Positionsgeber (PG) nachgeschalteten Proportional-Differentialregler (PD) mit überlagertem Integralregler (I) enthält und dass das Ausgangssignal des PD-Reglers einem die Abweichung vom Nullpunkt in eine die proportionale Gleichspannung umsetzenden Betragsbildner (BB) zugeführt wird, der wiederum über einen Zweipunktregler (SR) mit dem den Schrittmotor (SM) ansteuernden Drehfeldschalter (DS) in Verbindung steht.

5. Anordnung nach Anspruch 4, dadurch gekennzeichnet, dass der Betragsbildner (BB) zwei Operationsverstärker (OP1, OP2) mit gemeinsamem Ausgang enthält, wobei der erste Operationsverstärker (OP1) mit seinem inversen Eingang direkt und der zweite Operationsverstärker (OP2) mit seinem inversen Eingang über einen ersten Widerstand (R1) mit dem gemeinsamen Ausgang (UA) gekoppelt ist und dass der zweite Operationsverstärker (OP2) mit seinem inversen Eingang über einen zweiten Widerstand (R2) gleicher Grösse und der erste Operationsverstärker (OP1) mit seinem nicht invertierenden Eingang direkt mit dem gemeinsamen Eingang (UE) gekoppelt ist.

6. Anordnung nach Anspruch 4, dadurch gekennzeichnet, dass der Zweipunktregler (SR) einen Rückspeisetransformator (RT) enthält, der derart angeordnet ist, dass er im abgeschalteten Zustand die dem Schrittmotor (SM) entzogene Energie über eine schnelle Schaltdiode (D2) in die gemeinsame Spannungsversorgung (S) zurückspeist.

## Claims

1. An arrangement for operating a stepping motor (SM), in particular for positioning type carriers (T) for printing devices or the like, employing a position locator (PG) assigned to the rotor, and an electric device which produces a rotary field and which has a digital control circuit (DG) designed in such a manner that the stepping motor (SM) is quickly accelerated independently of the target point, and subsequently operated in the freewheeling state as and when required, and decelerated in the braking phase by a motor braking characteristic which is digitally recorded in a store (BKS), characterised in that an additional analogue servo-control circuit (AF) is provided which in dependence upon the momentary signal value of the triangular position locator signal (PG) effects the analogue fine regulation to the target point as a zero passage of the triangular position locator signal (PG) in accordance with a commutator-controlled direct-current motor.

2. An arrangement as claimed in Claim 1, characterised in that the output signals of the position locator (PG) consist of a first triangular signal (RS) assigned flank-wise to the target points which can be reproduced, and a rectangular signal (TTL) which serves to derive the direction of movement and is displaced by a phase angle relative to the first signal, and a further third signal (ID) for the synchronisation.

3. An arrangement as claimed in Claim 1, characterised in that the stepping motor (SM) is retained in a holding position, in that via a logic switching circuit (IN) the stator field is inverted in dependence upon the analogue control signal (PS) of the position locator (PG).

4. An arrangement as claimed in one of Claims 1 or 2, characterised in that the analogue servo-control circuit (AF) comprises a proportional differential regulator (PD) which has a superimposed integral regulator (I) and is connected following the position locator (PG), and that the output signal of the PD regulator is fed to a magnitude former (BB) which converts the deviation from the zero point into a proportional direct voltage and which is connected to the rotary field switch (DS), which controls the stepping motor (SM), by means of a two-step controller (SR).

5. An arrangement as claimed in Claim 4, characterised in that the magnitude former (BB) comprises two operational amplifiers (OP1, OP2) with a common output, where the first operational amplifier (OP1) has its inverse input directly connected to the common output (UA) and the second operational amplifier (OP2) has its inverse input connected to the common output (UA) by means of a first resistor (R1), and that the second operational amplifier (OP2) has its inverse input connected to the common input (UE) by means of a second resistor (R2) of the same size and the first operational amplifier (OP1) has its non-inverting input directly connected to the common input (UE).

6. An arrangement as claimed in Claim 4, characterised in that the two-step controller (SR) comprises a feedback transformer (RT) arranged in such a manner that in the switched-off position it returns the energy withdrawn from the stepping motor (SM) into the common voltage supply unit (S) by means of a rapid switching diode (D2).

## Revendications

1. Dispositif pour faire fonctionner un moteur pas-à-pas (SM), notamment pour positionner des portecaractères (T) pour des dispositifs d'impression ou analogues moyennant l'utilisation d'un capteur de position (PG) associé au rotor et d'un dispositif électrique produisant un champ tournant et qui comporte un circuit numérique de réglage (TG) qui est agencé de telle sorte qu'en fonction du point de destination, le moteur pas-à-pas (SM) est accéléré rapidement, fonctionne ensuite en cas de besoin en roue libre et, pendant la phase de freinage, est freiné conformément à une courbe caractéristique de freinage du moteur, mémorisée sous forme numérique dans une mémoire (BKS), caractérisé par le fait qu'il est prévu un circuit analogique supplémentaire de servocommande (AF) qui, en fonction de la valeur instantanée du signal de forme triangulaire du capteur de position (BG), réalise le réglage analogique précis jusqu'à l'instant du passage à zéro du signal de forme triangulaire du capteur de position (TG), à la manière d'un moteur à courant continu commandé par collecteur.

2. Dispositif suivant la revendication 1, caractérisé par le fait que les signaux de sortie du capteur de position (PG) sont formés par un premier signal de forme triangulaire (RS) associé par son flanc aux points de destination où l'impression doit être effectuée, et par un second signal rectangulaire (TTL), décalé d'un angle de phase par rapport au premier signal et servant à dériver le sens de déplacement, et par un troisième signal supplémentaire (ID) servant à la synchronisation.

3. Dispositif suivant la revendication 1, caractérisé par le fait que le moteur pas-à-pas (SM) est maintenu dans une position d'arrêt par le fait que le champ statorique est inversé, par l'intermédiaire d'un montage logique (IN), en fonction du signal de réglage analogique (RS) du capteur de position (PG).

4. Dispositif suivant l'une des revendications 1 ou 2, caractérisé par le fait que le circuit analogique de servocommande (AF) contient un régulateur à action proportionnelle et différentielle (PD), branché en aval du capteur de position (PG) et en amont duquel est branché un régulateur à action intégrale (I), et que le signal de sortie du régulateur à action proportionnelle et différentielle est envoyé à un dispositif (BB) de formation de la valeur, transformant l'écart par rapport à zéro en une tension continue proportionnelle et qui est relié à nouveau par l'intermédiaire d'un régulateur à deux positions (SR), au commutateur de champ tournant (DS) commandant le moteur pas-à-pas (SM).

5. Dispositif suivant la revendication 4, caractérisé par le fait que le dispositif (BB) de formation de la valeur contient deux amplificateurs opérationnels (OP1, OP2) possédant une sortie commune, le premier amplificateur opérationnel (OP1) étant accouplé directement par son entrée inverseuse à la sortie commune (UA) et le second amplificateur opérationnel (OP2) étant accouplé par son entrée inverseuse par l'intermédiaire d'une première résistance (R1) à la sortie commune, et que le second amplificateur opérationnel (OP2) est accouplé par son entrée inverseuse, par l'intermédiaire d'une seconde résistance (R2) de même valeur à l'entrée commune (UE) et que le premier amplificateur opérationnel (OP1) est accouplé directement par son entrée non inverseuse à l'entrée commune.

6. Dispositif suivant la revendication 4, caractérisé par le fait que le régulateur à deux positions (SR) contient un transformateur de rétroalimentation (RT) qui est disposé de telle sorte qu'à l'état débranché, l'énergie prélevée par le moteur pas-à-pas (SM) est renvoyée, par l'intermédiaire d'une diode de commutation rapide (D2), à l'alimentation commune en tension (S).

# FIG 1

T
SM
TS
PG
O
AF
SE
LB
SR
DS
SP
DG
HF

# FIG 2

U
RS
A
DW
AP
TTL
JD

0 035 258

FIG 3

FIG 4

FIG 5

FIG 6

FIG 7

11

# FIG 8

# FIG 9

## FIG 10

## FIG 11

# FIG 12

# FIG 13